# EUROPEAN PATENT SPECIFICATION

(11) **EP 3 229 557 B1**
(45) Date of publication and mention of the grant of the patent: **19.02.2020**
(21) Application number: 17163361.3
(22) Date of filing: 28.03.2017
(51) Int. Cl.: H05B 33/08

(54) **EMERGENCY LIGHTING**
NOTBELEUCHTUNG
ÉCLAIRAGE D'URGENCE

(30) Priority: 08.04.2016 CN 201620289929 U; 08.04.2016 CN 201610216404
(43) Date of publication of application: 11.10.2017
(73) Proprietor: Kosnic (Suzhou) Limited.Co, Suzhou Jiangsu 215151 (CN)
(72) Inventor: Cao, Dong Ming, Suzhou (CN); Kuang, Wen Tao, Thatcham, Berkshire RG18 4AB (GB)
(74) Representative: Bryers LLP

(56) References cited:
- WO-A1-2010/139080
- O'SULLIVAN D ET AL: "PWM conductance control", 19TH. ANNUAL IEEE POWER ELECTRONICS SPECIALISTS CONFERENCE. PESC'88 RECORD; [ANNUAL POWER ELECTRONICS SPECIALISTS CONFERENCE], NEW YORK, NY : IEEE, US, 1 January 1988 (1988-01-01), pages 351-359vol.1, XP031172190,
- RASHID, MUHAMMAD H.: "Power Electronics Handbook", REFEREX, 31 December 2001 (2001-12-31), XP040425239,

## Description

### Field of the Invention

The present invention relates to emergency lighting, more particularly to an emergency lighting system and a method of providing emergency lighting.

### Background of the Invention

Emergency lighting plays an important role in security systems for modern property management, and is an important facility of modern industrial and public buildings, being closely related to both personal safety and building safety. Emergency lighting becomes more important when the population density increases, such as from accelerated urbanization, which increases security risk

An emergency lighting system is a system for providing lighting to ensure people are safely evacuated when the general lighting system has failed and cannot therefore provide normal lighting. One of the important constituents of any emergency lighting system is power supply.

At present, emergency lighting fixtures of known emergency lighting systems are designed especially for emergency lighting, and will not provide normal lighting in daily life. That is, an entire lighting system (including a general lighting system and an emergency lighting system) includes both emergency lighting fixtures and general lighting fixtures (referred to the general lighting load hereinafter) with a high cost.

International Patent Publication No. WO 2010/139080 A1 discloses an electronic circuit for converting an existing mains-operated luminaire into an emergency luminaire. The mains-operated luminaire comprises an LED array and a mains converter for supplying the same with power. An emergency lighting element having an electronic circuit supplies the LED array with power from a storage battery during emergency operation.

It is desirable to efficiently manage the battery capacity of an emergency lighting system to ensure that the operation time based on given battery capacity remains unchanged regardless of the different general lighting loads that the emergency lighting system may be used with.

### Summary of the Invention

According to the invention, which is defined by independent claim 1, there is provided an emergency lighting system comprising:
a battery supplying module, a DC transforming module, and a power controlling module; the battery supplying module for supplying power to the DC transforming module when an emergency lighting condition is met; the DC transforming module for supplying power to a general lighting load; the power controlling module for obtaining a rated voltage of the general lighting load, generating a control signal related to the obtained rated voltage using the obtained rated voltage and a predetermined power, and providing the generated control signal to the DC transforming module; the DC transforming module for altering an output current provided by the battery supplying module using the control signal provided by the power controlling module and providing an altered output current to the general lighting load for operating the general lighting load at substantially the predetermined power; wherein the predetermined power is a constant value; characterised in that: the power controlling module comprises: a voltage sampling circuit, a first operational amplifier, and a second operational amplifier; the voltage sampling circuit for sampling the rated voltage of the general lighting load, the first operational amplifier for feeding the rated voltage sampled by the voltage sampling circuit to an inverting terminal of the second operational amplifier, and the second operational amplifier for generating the control signal using the rated voltage at the inverting terminal, wherein the larger the rated voltage fed to the inverting terminal, the smaller the altered output current provided by the DC transforming module to the general lighting load; whereby, during an emergency lighting condition, the output current provided by the battery supplying module is altered by the DC transforming module to maintain operation of the general lighting load at a substantially constant predetermined power.

The emergency lighting system may further comprise an emergency controlling module for determining whether the emergency lighting condition is met and for controlling the battery supplying module to supply power to the DC transforming module when the emergency lighting condition is met.

The control signal may be one of: an analogue signal, a pulse width modulated signal. The emergency lighting system and a general lighting system may be connected to the same general lighting load via an extension interface.

The emergency lighting system and the general lighting system may be connected to an AC power supply via a shared neutral line.

In a preferred application, the general lighting load is a LED lighting load.

In an embodiment, the emergency lighting system is configured to perform the steps in a method of providing emergency lighting of: (a) determining whether the emergency lighting condition is met; and (b) in response to determining that the emergency lighting condition is met: receiving an output current from the battery supplying module; receiving a rated voltage of the general lighting load; and altering the output current using the received rated voltage and the predetermined power to provide an altered output current for operating the general lighting load at substantially the predetermined power.

According to a second aspect an emergency lighting system according to the first aspect is used with an installed general lighting load.

The present invention thus provides an emergency lighting system for providing an emergency lighting service in which a constant power is provided for an installed general lighting load, without requiring changes to the existing general lighting fixtures.

By setting a predetermined power that is a constant value, a constant output power can be maintained for different lighting loads with different rated voltages during emergency lighting. This ensures the operation time based on given battery capacity remains unchanged regardless of the different general lighting loads that the present invention may be used with.

In an emergency lighting situation, an emergency lighting system of the present invention can provide a constant power for an installed general lighting load, so that it can provide the emergency lighting service without changing the structure of the installed general lighting load. It can be applied to various general lighting fixtures with different rated voltages and different rated powers, so that the overall installation cost can be reduced without using specialized emergency lighting fixtures.

In an application, the general lighting load is a load providing light in a general lighting system, and the general lighting system is a system providing lighting service under a normal power supplying circumstance.

In an emergency lighting situation, an emergency lighting method of the present invention can provide a constant power for an installed general lighting load, so that the emergency lighting service can be provided without changing the structure of the installed general lighting load. It is applicable to various general lighting fixtures with different rated voltages and different rated powers, so that the lighting cost can be significantly reduced without using the special emergency lighting fixtures.

Further particular and preferred aspects of the invention are set out in the accompanying dependent claims.

### Brief Description of the Drawings

The present invention will now be more particularly described, with reference to the accompanying drawings, in which:
**Figure 1** is a structure diagram of an emergency lighting system;
**Figure 2** is a connection diagram showing the emergency lighting system of **Figure 1** accessing a general lighting system;
**Figure 3** is a structure diagram of an AC-DC transforming module of the emergency lighting system of **Figure 1**;
**Figure 4** is a structure diagram of a battery charge management module of the emergency lighting system of **Figure 1**;
**Figure 5** is a circuit diagram of a power controlling module and a DC transforming module of the emergency lighting system of **Figure 1**;
**Figure 6** is a circuit diagram of an emergency controlling module of the emergency lighting system of **Figure 1**;
**Figure 7** is a flow chart showing steps in a first emergency lighting method; and
**Figure 8** is a flow chart showing steps in a second emergency lighting method.

### Description

In the following description, sufficient technical details are provided to enable those of ordinary skill in the art to understand the present invention. It is to be understood that embodiments of the present invention can be provided in many alternate forms and the invention should not be construed as limited to the examples set forth herein but by the scope of the appended claims.

Embodiments will now be described with reference to the accompanying drawings to clearly explain the purpose, technical solutions and advantages of the present invention. In the Figures, the same or similar reference numbers indicate the same or similar components or parts, and may be omitted, as appropriate. In addition, it should be noted that relationship terms, such as "first" and "second" in the appended claims and description, are used to distinguish one entity or operation from another entity or operation, it does not necessarily require or indicate that these relationships or sequences exists among these entities or operations. Further, terms such as "comprise" and "include" and variations thereof are intended to include at least the entity, entities, operation, or operations stated thereafter.

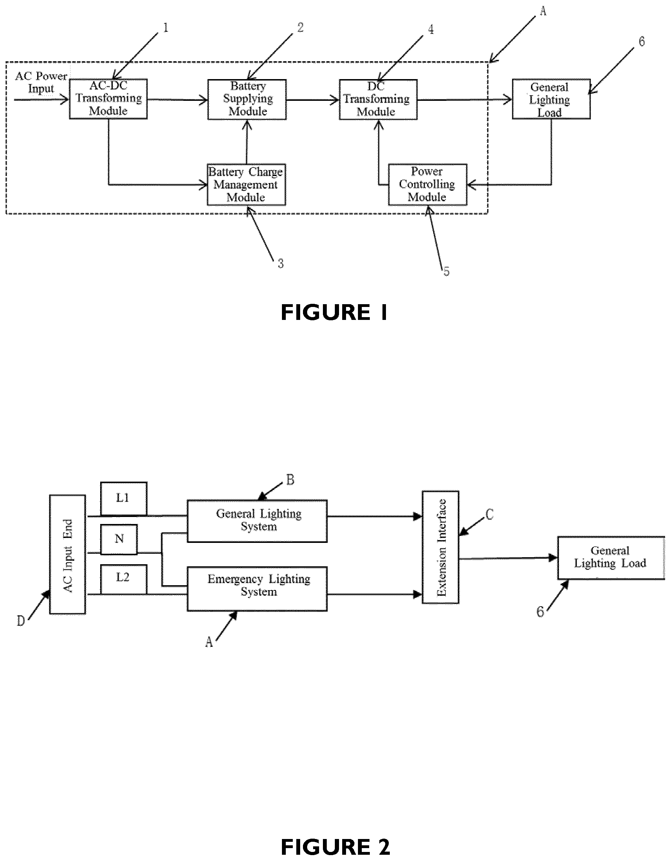

A first aspect of the present invention relates to an emergency lighting system. **Figure 1** is a structure diagram of an emergency lighting system according to a specific embodiment. As shown in **Figure 1**, the emergency lighting system comprises an AC-DC (Alternating Current-Direct Current) transforming module 1, a battery supplying module 2, a battery charge management module 3, a DC transforming module 4, and a power controlling module 5.

The AC-DC transforming module 1 connects the battery supplying module 2 and the battery charge management module 3, and is used to transform AC provided by an AC power supply (for example, distribution box) to DC and charge the batteries in the battery supplying module 2. It should be appreciated that the battery supplying module is always in a charge status under a general lighting condition.

The battery supplying module 2 connects the DC transforming module 4 and is used to supply power to the DC transforming module 4 when an emergency lighting condition is met. The battery charge management module 3 is used to intelligently manage the charging of the battery supplying module 2.

The power controlling module 5 is used to obtain a rated voltage of a general lighting load 6, and generate a control signal related to the obtained rated voltage using the obtained rated voltage and a predetermined power. In an application, the general lighting system is a system providing lighting service under a normal power supplying circumstance. Preferably, the control signal is an analogue signal or a pulse width modulated signal.

The DC transforming module 4 connects the power controlling module 5 and the general lighting load 6, and is used to receive the control signal from the power controlling module 5 and alter the output current provided by the battery supplying module 2 according to the control signal and provide the altered output current to the general lighting load 6 for operating the general lighting load 6 at substantially the predetermined power. According to the present invention, the predetermined power is a constant value.

Thus, during an emergency lighting condition, the output current provided by the battery supplying module 2 is altered by the DC transforming module 5 to maintain operation of the general lighting load 6 at a substantially constant predetermined power.

By setting a predetermined power, a constant output power can be maintained for different lighting loads with different rated voltages during emergency lighting. This ensures the operation time based on given battery capacity remains unchanged regardless of the specific lighting load. It is to be understood that the present invention may be used with any of different general lighting loads.

It should be appreciated that the constant value of the predetermined rated power can be determined by specific applications. The constant value of different specific embodiments can be the same value or different values.

In addition, it should be appreciated that the emergency lighting system A can be connected to the general lighting load in the general lighting system by various modes.

A first connection mode, according to a specific example, is shown in **Figure 2****.** The emergency lighting system A and the general lighting system B are both connected to the same general lighting load 6 via an extension interface C. The emergency lighting system A and the general lighting system B are connected to an AC power supply D (i.e. AC input end) via a shared neutral line. Obviously, the emergency lighting system A of the present invention can be easily connected to an existing general lighting system without additional emergency lighting load.

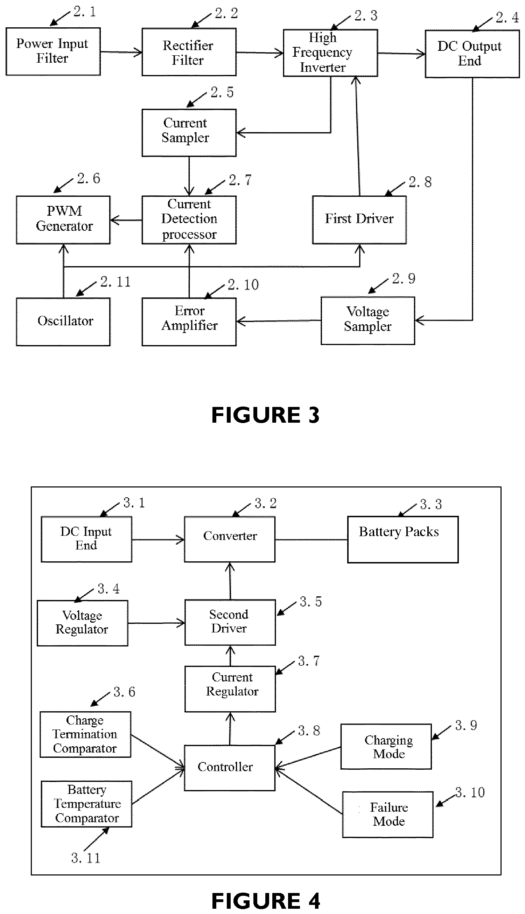

A structure diagram of an example AC-DC transforming module 1 of the emergency lighting system of **Figure 1** is shown in **Figure 3****.** Mains power is filtered by the AC-DC transforming module 1 to a pulsating DC, is processed by a high frequency inverter into a stable DC, and is then supplied to charge the battery supplying module 2.

A structure diagram of an example battery charge management module 3 of **Figure 1** is shown in **Figure 4****.** In this specific example, the battery charge management module is a battery charge management chip. The battery charge management chip can implement an intelligent charging management of the battery in the battery supplying module 2.

For example, when the input voltage is larger than a low voltage detection threshold of the supply power and the chip enable input end is high, the battery charge management chip starts charging the battery, and the charging (CHRG) pin outputs low level which indicates the charging is in process. When the battery voltage is lower than a particular value, such as 6.2V, the battery is pre-charged using a small current. When the battery voltage is higher than the particular value, such as 6.2V, the battery is charged by a constant current mode and the charging current is determined by: a resistor RISET between the ISET (current setting) pin and GND (ground) < a predetermined value (a current setting resistor). When the battery voltage connects a modulation voltage, such as 8.4V, of the battery end, the charging current is gradually reduced and the chip enters a constant-voltage mode. This mode is kept until the charging is over.

In order to improve the safety and life of a rechargeable battery pack (i.e. the battery supplying module 2), such as a lithium battery pack, an intelligent charging management chip is adopted for the lithium battery pack to prevent overcharging, over-discharging, short circuit and over-temperature. The safety of the battery can be ensured by monitoring the whole charging process. The life of the battery can be improved by automatically identifying the battery status and adopting a different charging voltage and charging current for different battery statuses.

In an application in which the general lighting load is a LED lighting load, the battery supplying module 2 preferably includes a lithium battery pack. A lithium battery has the advantages of being lightweight, having high energy density, being free of poisonous heavy metals, e.g. chromium, mercury and so on, and complies with environmental requirements to substitute nickel-cadmium batteries used in conventional emergency lighting system with lithium batteries.

At present, light emitting diode (LED) fixtures on the market have largely replaced traditional light sources. An LED fixture has the characteristics of being energy-saving, high efficiency, having a long life and so on, and has 40% higher luminous efficiency than a conventional light source. Therefore, in a preferred application, the general lighting load is an LED general lighting load.

Power controlling module 5 of the emergency lighting system of **Figure 1** comprises a voltage sampling circuit, a first operational amplifier and a second operational amplifier. The voltage sampling circuit is used to sample the rated voltage of the general lighting load, the first operational amplifier feeds the rated voltage sampled by the voltage sampling circuit to an inverting terminal of the second operational amplifier, and the second operation amplifier generates a control signal using the rated voltage at the inverting terminal, wherein the generated control signal is proportional to the rated voltage of the general lighting load. The control signal is used to control the DC transforming module 4 (such as a DC-DC transforming chip) to achieve the purpose of constant power output.

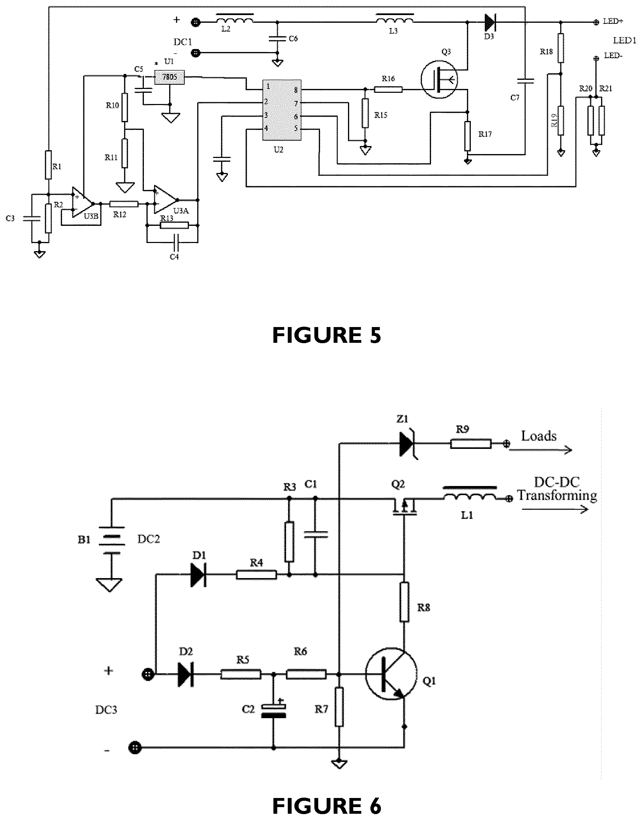

An example specific circuit diagram of an example power controlling module 5 and an example DC transforming module 4 is shown in **Figure 5**, in which R1, R2, R10-R21 are resistors, U1 is a three-terminal regulator (in this example, with a voltage of 5V), U2 is a DC-DC transforming chip (i.e. DC transforming module 4); U3A-U3B are operational amplifiers, C3-C7 are capacitors, Q3 is a MOS (Metal Oxide Semiconductor) transistor, D3 is a diode, L2-L3 are inductors, DCI is a battery, and LEDI is a general lighting load.

The example specific circuit works as follows. R1 and R2 sample the voltage of the load while operational amplifier U3B is used as a voltage follower that follows the voltage of the load, and the voltage is fed to the inverting terminal of operational amplifier U3A.

Operational amplifier U3A is used as an inverting amplifier and will generate a signal that is inversely proportional to the voltage of the load, wherein the larger the output voltage of the load, the smaller the signal (an analogue signal or a pulse width modulated signal) outputted by operational amplifier U3A and the smaller the current outputted by the DC-DC transforming chip; and vice versa.

In a specific example, the DC transforming module 4 is a voltage transforming chip (i.e. DC-DC transforming chip) and the output current provided to the general lighting load by the voltage transforming chip is controlled by the control signal, wherein the smaller the control signal, the smaller the current outputted by the voltage transforming chip.

Preferably, the emergency lighting system further comprises an emergency controlling module for determining whether the emergency lighting condition is met and controlling the battery supplying module to supply power to the DC transforming module when the emergency lighting condition is met.

An example specific circuit diagram of an example emergency controlling module is shown in **Figure 6****,** in which R3-R8 are resistors, C1-C2 are capacitors, Q1 is a transistor (in this example, with a type 9013), Q2 is a PMOS transistor, B1 is a battery (in this example, the battery voltage is 7.2V), D1-D2 are diodes, Z1 is a stabilivolt (in this example, with a voltage of 18V), and DC2-DC3 are DC power supply.

The two arrows in **Figure 6** indicate the circuit outputs to the general lighting load and the circuit connection to the DC-DC transforming circuit.

When the system is powered down, battery B1 is enabled, and R3, R4 and C1 constitute a first delay circuit, and R5, R6 and C2 constitute a second delay circuit. When the system is working properly, Q2 is turned on and in a conductive state, so that it can provide stable voltage value to the load; when the system is powered down, Q1 is turned off, the gate voltage of Q2 is 0V, its source voltage is larger than its drain voltage, there is a current through the source and the drain, and the system is powered by the battery B1.

Whether the emergency condition is met is determined by analysing the power supply of an AC power supply, which supplies power to the battery supplying module 2 or the general lighting system in a normal operating condition. If the power supply of the AC power supply is stopped or abnormal, the emergency lighting condition is met; otherwise, the emergency lighting condition is not met.

Furthermore, it should be appreciated that, in various applications of the present invention, 'lighting fixtures', 'loads', and 'lighting loads' all indicate fixtures providing a lighting service in a general or emergency lighting system.

In an emergency lighting situation, the emergency lighting system of the present invention can provide a constant power for an installed general lighting load, so that it can provide the emergency lighting service without changing the structure of the installed general lighting load. It can be applied to various general lighting fixtures with different rated voltages and different rated powers, so that the lighting cost can be significantly reduced without using special emergency lighting fixtures. In other words, the emergency lighting system of the present invention can advantageously be used with different installed general lighting loads without requiring any adaptation or modification of the installed general lighting load.

A second aspect of the present invention relates to use of an emergency lighting system of the first aspect of the present invention with a general lighting load.

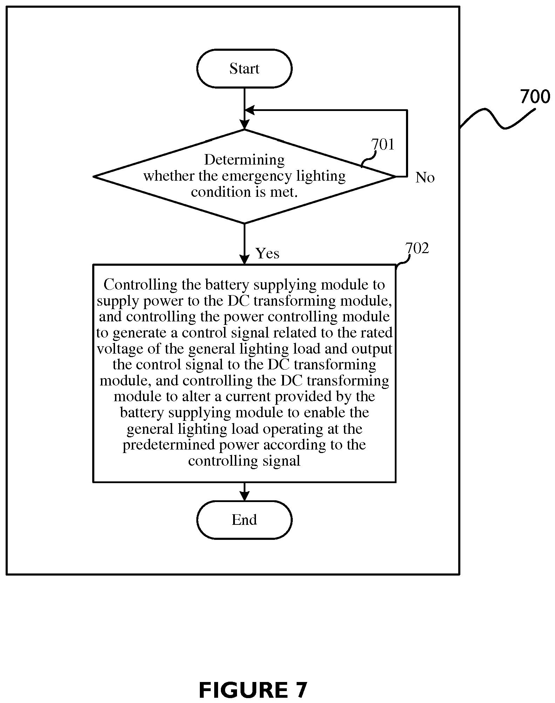

**Figure 7** is a flow chart showing steps in a first example method 700. At step 701, it is determined whether the emergency lighting condition is met. For example, whether the emergency condition is met can be determined by analysing the power supply of an AC power supply which supplies power to a battery supplying module or a general lighting system in a normal operating condition. If the power supply of the AC power supply is stopped or abnormal, the emergency lighting condition is met; otherwise, the emergency lighting condition is not met. If the emergency light condition is met, the process enters step 702; otherwise, it returns to step 701. At step 702, a battery supplying module is controlled to supply power to a DC transforming module, and a power controlling module is controlled to generate a control signal related to the obtained rated voltage of a general lighting load and to output the control signal to the DC transforming module, and the DC transforming module is controlled to alter the output current provided by the battery supplying module and to provide an altered output current to the general lighting load for operating the general lighting load at the predetermined power according to the control signal. Then, the process can be ended.

In an emergency lighting situation, an emergency lighting system using this method can provide a constant power for an installed general lighting load, so that an emergency lighting service can be provided without changing the structure of the installed general lighting load. It can be applied to various general lighting fixtures with different rated voltages and different rated powers, so that the lighting cost can be reduced by avoiding the need to use special emergency lighting fixtures.

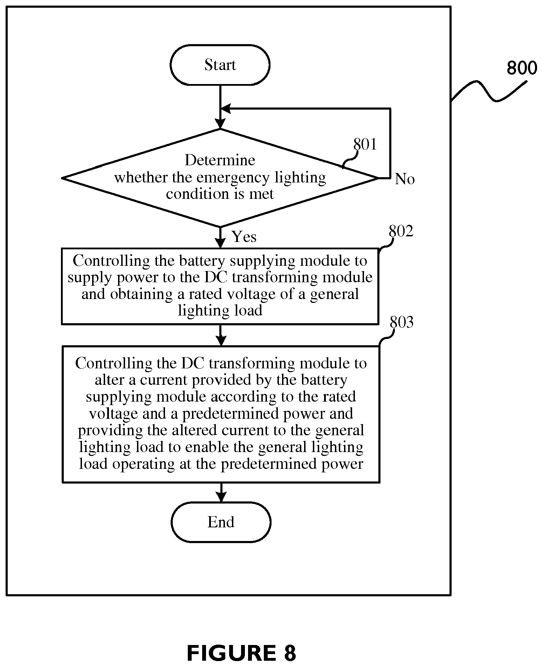

**Figure 8** is a flow chart showing steps in a second example method 800. At step 801, it is determined whether the emergency lighting condition is met. For example, whether the emergency condition is met can be determined by analysing the power supply of an AC power supply which supplies power to a battery supplying module or a general lighting system in a normal operating condition. If the power supply of the AC power supply is stopped or abnormal, the emergency lighting condition is met; otherwise, the emergency lighting condition is not met. If the emergency light condition is met, the process enters step 802; otherwise, it returns to step 801. At step 802, a battery supplying module is controlled to supply power to a DC transforming module and a rated voltage of a general lighting load is obtained. Then, the process enters step 803. At step 803, the DC transforming module is controlled to alter an output current provided by the battery supplying module according to the obtained rated voltage and a predetermined power and to provide the altered output current to the general lighting load for maintaining operation of the general lighting load at a substantially constant power during the emergency lighting condition. Then, the process can be ended.

In an application, the emergency lighting system and a general lighting system are connected to the same general lighting load via an extension interface.

In a method of use of an emergency lighting system as disclosed herein the predetermined power is a constant value. In an emergency lighting situation, an emergency lighting system using the method of providing emergency lighting can provide a constant power for an installed general lighting load, so that the emergency lighting service can be provided without changing the structure of the installed general lighting load. It is applicable to various general lighting fixtures with different rated voltages and different rated powers, so that the lighting cost can be significantly reduced without having to use special emergency lighting fixtures.

As discussed above, the emergency lighting system of the present invention can provide an emergency lighting service by providing constant power for an installed general lighting load without requiring any changes to the existing general lighting load and fixtures thereof.

Although illustrative embodiments of the invention have been disclosed in detail herein, with reference to the accompanying drawings, it is to be understood that the invention is not limited to the precise embodiments shown and that various changes and modifications can be effected therein by one skilled in the art without departing from the scope of the invention as defined by the appended claims.

## Claims

1. An emergency lighting system (A), comprising:
a battery supplying module (2),
a DC transforming module (4), and
a power controlling module (5);
the battery supplying module (2) for supplying power to the DC transforming module (4) when an emergency lighting condition is met;
the DC transforming module (4) for supplying power to a general lighting load (6);
the power controlling module (5) for obtaining a rated voltage of the general lighting load (6), generating a control signal related to the obtained rated voltage using the obtained rated voltage and a predetermined power, and providing the generated control signal to the DC transforming module (4);
the DC transforming module (4) for altering an output current provided by the battery supplying module (2) using the control signal provided by the power controlling module (5) and providing an altered output current to the general lighting load (6) for operating the general lighting load (6) at substantially the predetermined power; wherein
the predetermined power is a constant value; **characterised in that**:
the power controlling module (5) comprises:
a voltage sampling circuit,
a first operational amplifier, and
a second operational amplifier;
the voltage sampling circuit for sampling the rated voltage of the general lighting load (6),
the first operational amplifier for feeding the rated voltage sampled by the voltage sampling circuit to an inverting terminal of the second operational amplifier, and
the second operational amplifier for generating the control signal using the rated voltage at the inverting terminal, wherein the larger the rated voltage fed to the inverting terminal, the smaller the altered output current provided by the DC transforming module (4) to the general lighting load (6);
whereby, during an emergency lighting condition, the output current provided by the battery supplying module is altered by the DC transforming module to maintain operation of the general lighting load at a substantially constant predetermined power.

2. The emergency lighting system (A) of claim 1, further comprising:
an emergency controlling module for determining whether the emergency lighting condition is met and for controlling the battery supplying module (2) to supply power to the DC transforming module (4) when the emergency lighting condition is met.

3. The emergency lighting system (A) of claim 1, wherein the control signal is one of: an analogue signal, a pulse width modulated signal.

4. The emergency lighting system (A) of claim 1, wherein the emergency lighting system (A) and a general lighting system (B) are connected to the same general lighting load (6) via an extension interface (C).

5. The emergency lighting system (A) of claim 4, wherein the emergency lighting system (A) and the general lighting system (B) are connected to an AC power supply (D) via a shared neutral line.

6. The emergency lighting system (A) of any one of claims 1 to 5, wherein the general lighting load (6) is a LED lighting load.

7. The emergency lighting system (A) of any one of claims 1 to 6, configured to perform the steps in a method of providing emergency lighting of:
(a) determining whether the emergency lighting condition is met; and
(b) in response to determining that the emergency lighting condition is met:
receiving an output current from the battery supplying module (2);
receiving a rated voltage of the general lighting load (6); and
altering the output current using the received rated voltage and the predetermined power to provide an altered output current for operating the general lighting load (6) at substantially the predetermined power.

8. Use of the emergency lighting system (A) of any one of claims I to 7 with an installed general lighting load.

## Patentansprüche

1. Notbeleuchtungssystem (A), umfassend:
ein Batterieeinspeisemodul (2),
ein DC-Transformationsmodul (4); und
ein Leistungssteuerungsmodul (5);
wobei das Batterieeinspeisemodul (2) dazu dient, Leistung in das DC-Transformationsmodul (4) einzuspeisen, wenn eine Notbeleuchtungsbedingung erfüllt wird;
das DC-Transformationsmodul (4) dazu dient, Leistung in eine allgemeine Beleuchtungslast (6) einzuspeisen;
das Leistungssteuerungsmodul (5) dazu dient, eine Nennspannung der allgemeinen Beleuchtungslast (6) zu erhalten, ein Steuersignal in Bezug auf die erhaltene Nennspannung unter Verwendung der erhaltenen Nennspannung und einer vorbestimmten Leistung zu generieren und das generierte Steuersignal dem DC-Transformationsmodul (4) bereitzustellen;
das DC-Transformationsmodul (4) dazu dient, einen Ausgabestrom, der durch das Batterieeinspeisemodul (2) bereitgestellt wird, unter Verwendung des Steuersignals, welches durch das Leistungssteuerungsmodul (5) bereitgestellt wird, zu ändern und der allgemeinen Beleuchtungslast (6) einen geänderten Ausgabestrom bereitzustellen, um die allgemeine Beleuchtungslast (6) mit im Wesentlichen der vorbestimmten Leistung zu betreiben; wobei
die vorbestimmte Leistung ein konstanter Wert ist;
**dadurch gekennzeichnet dass**:
das Leistungssteuerungsmodul (5) umfasst:
eine Spannungsabtastschaltung,
einen ersten Operationsverstärker, und
einen zweiten Operationsverstärker;
wobei die Spannungsabtastschaltung zum Abtasten der Nennspannung der allgemeinen Beleuchtungslast (6) dient,
der erste Operationsverstärker zum Zuführen der durch die Spannungsabtastschaltung abgetasteten Nennspannung zu einer invertierenden Klemme des zweiten Operationsverstärkers dient, und
der zweite Operationsverstärker zum Generieren des Steuersignals unter Verwendung der Nennspannung an der invertierten Klemme dient, wobei der geänderte Ausgabestrom, welcher der allgemeinen Beleuchtungslast (6) durch das DC-Transformationsmodul (4) bereitgestellt wird, umso kleiner ist, je größer die der invertierenden Klemme zugeführte Nennspannung ist;
wobei während einer Notbeleuchtungsbedingung der durch das Batterieeinspeisemodul bereitgestellte Ausgabestrom durch das DC-Transformationsmodul geändert wird, um den Betrieb der allgemeinen Beleuchtungslast mit einer im Wesentlichen konstanten vorbestimmten Leistung aufrechtzuerhalten.

2. Notbeleuchtungssystem (A) nach Anspruch 1, des Weiteren umfassend:
ein Notsteuerungsmodul zum Ermitteln, ob die Notbeleuchtungsbedingung erfüllt ist, und zum Steuern des Batterieeinspeisemoduls (2), um in das DC-Transformationsmodul (4) Leistung einzuspeisen, wenn die Notbeleuchtungsbedingung erfüllt ist.

3. Notbeleuchtungssystem (A) nach Anspruch 1, wobei das Steuersignal eines von einem analogen Signal, einem pulsbreitenmodulierten Signal ist.

4. Notbeleuchtungssystem (A) nach Anspruch 1, wobei das Notbeleuchtungssystem (A) und das allgemeine Beleuchtungssystem (B) über eine Erweiterungsschnittstelle (C) mit derselben allgemeinen Beleuchtungslast (6) verbunden sind.

5. Notbeleuchtungssystem (A) nach Anspruch 4, wobei das Notbeleuchtungssystem (A) und das allgemeine Beleuchtungssystem (B) über einen gemeinsam genutzten Neutralleiter mit einer AC-Leistungseinspeisung (D) verbunden sind.

6. Notbeleuchtungssystem (A) nach einem der Ansprüche 1 bis 5, wobei die allgemeine Beleuchtungslast (6) eine LED-Beleuchtungslast ist.

7. Notbeleuchtungssystem (A) nach einem der Ansprüche 1 bis 6, das ausgestaltet ist, um die folgenden Schritte in einem Verfahren zur Bereitstellung von Notbeleuchtung durchzuführen:
(a) Ermitteln, ob die Notbeleuchtungsbedingung erfüllt ist; und
(b) in Reaktion auf die Ermittlung, dass die Notbeleuchtungsbedingung erfüllt ist:
Empfangen eines Ausgabestroms von dem Batterieeinspeisemodul (2);
Empfangen einer Nennspannung der allgemeinen Beleuchtungslast (6); und
Ändern des Ausgabestroms unter Verwendung der empfangenen Nennspannung und der vorbestimmten Leistung, um einen geänderten Ausgabestrom zum Betreiben der allgemeinen Beleuchtungslast (6) mit im Wesentlichen der vorbestimmten Leistung bereitzustellen.

8. Verwendung des Notbeleuchtungssystems (A) nach einem der Ansprüche 1 bis 7 mit einer installierten allgemeinen Beleuchtungslast.

## Revendications

1. Système d'éclairage de secours ou d'urgence (A), comprenant:
un module d'alimentation par batterie (2),
un module de transformation CC (4), et
un module de commande de puissance (5);
le module d'alimentation par batterie (2) étant destiné à fournir une alimentation au module de transformation CC (4) lorsqu'une condition d'éclairage de secours est remplie;
le module de transformation CC (4) étant destiné à fournir une alimentation à une charge d'éclairage général (6);
le module de commande de puissance (5) étant destiné à obtenir une tension nominale de la charge d'éclairage général (6), à générer un signal de commande associé à la tension nominale obtenue en utilisant la tension nominale obtenue et une puissance prédéterminée, et à fournir le signal de commande généré au module de transformation CC (4);
le module de transformation CC (4) étant destiné à modifier un courant de sortie délivré par le module d'alimentation par batterie (2) en utilisant le signal de commande délivré par le module de commande de puissance (5) et à fournir un courant de sortie modifié à la charge d'éclairage général (6) pour faire fonctionner la charge d'éclairage général (6) sensiblement à la puissance prédéterminée; où
la puissance prédéterminée est une valeur constante; **caractérisé en ce que**:
le module de commande de puissance (5) comprend:
un circuit d'échantillonnage de tension,
un premier amplificateur opérationnel, et
un second amplificateur opérationnel;
le circuit d'échantillonnage de tension étant destiné à échantillonner la tension nominale de la charge d'éclairage général (6),
le premier amplificateur opérationnel étant destiné à appliquer la tension nominale échantillonnée par le circuit d'échantillonnage de tension à une borne inverseuse du second amplificateur opérationnel, et
le second amplificateur opérationnel étant destiné à générer le signal de commande en utilisant la tension nominale à la borne inverseuse, où plus la tension nominale appliquée à la borne inverseuse est élevée, plus le courant de sortie modifié délivré par le module de transformation CC (4) à la charge d'éclairage général (6) est faible;
grâce à quoi, durant une condition d'éclairage de secours, le courant de sortie délivré par le module d'alimentation par batterie est modifié par le module de transformation CC pour maintenir le fonctionnement de la charge d'éclairage général à une puissance prédéterminée sensiblement constante.

2. Système d'éclairage de secours (A) selon la revendication 1, comprenant en outre:
un module de commande de secours destiné à déterminer si la condition d'éclairage de secours est remplie et à commander le module d'alimentation par batterie (2) pour fournir une alimentation au module de transformation CC (4) lorsque la condition d'éclairage de secours est remplie.

3. Système d'éclairage de secours (A) selon la revendication 1, dans lequel le signal de commande est l'un: d'un signal analogique, d'un signal modulé en largeur d'impulsion.

4. Système d'éclairage de secours (A) selon la revendication 1, où le système d'éclairage de secours (A) et un système d'éclairage général (B) sont connectés à la même charge d'éclairage général (6) via une interface d'extension (C).

5. Système d'éclairage de secours (A) selon la revendication 4, où le système d'éclairage de secours (A) et le système d'éclairage général (B) sont connectés à une alimentation CA (D) via une ligne de neutre partagée.

6. Système d'éclairage de secours (A) selon l'une quelconque des revendications 1 à 5, dans lequel la charge d'éclairage général (6) est une charge d'éclairage LED.

7. Système d'éclairage de secours (A) selon l'une quelconque des revendications 1 à 6, configuré pour réaliser les étapes d'un procédé de fourniture d'éclairage de secours consistant à:
(a) déterminer si la condition d'éclairage de secours est remplie; et
(b) en réponse à la détermination du fait que la condition d'éclairage de secours est remplie:
recevoir un courant de sortie du module d'alimentation par batterie (2);
recevoir une tension nominale de la charge d'éclairage général (6); et
modifier le courant de sortie en utilisant la tension nominale reçue et la puissance prédéterminée pour fournir un courant de sortie modifié afin de faire fonctionner la charge d'éclairage général (6) sensiblement à la puissance prédéterminée.

8. Utilisation du système d'éclairage de secours (A) selon l'une quelconque des revendications 1 à 7 avec une charge d'éclairage général installée.
